# EUROPÄISCHE PATENTSCHRIFT

(11) **EP 0 417 402 B1**
(45) Veröffentlichungstag und Bekanntmachung des Hinweises auf die Patenterteilung: **02.11.1994**
(21) Anmeldenummer: 90111069.2
(22) Anmeldetag: 12.06.1990
(51) Int. Cl.: F04B 43/06, F04B 21/02, F04B 21/00

(54) **Membranpumpe**
Membrane pump
Pompe à membrane

(30) Priorität: 31.08.1989 DE 3928949
(43) Veröffentlichungstag der Anmeldung: 20.03.1991
(73) Patentinhaber: J. Wagner GmbH, 88669 Markdorf (DE)
(72) Erfinder: Gebauer, Gerhard, Dipl.-Ing. (FH), D-7775 Bermatingen (DE); Goes, Wilfried, Dipl.-Ing. (FH), D-7758 Meersburg (DE); Rosenauer, Otto, Dipl.-Ing. (FH), D-7994 Langenargen (DE)
(74) Vertreter: Liesegang, Roland, Dr.-Ing.

(56) Entgegenhaltungen:
- EP-A- 0 226 122
- FR-A- 1 037 978
- GB-A- 588 612
- GB-A- 1 108 423
- GB-A- 2 037 881
- US-A- 3 354 831
- US-A- 4 594 057
- US-A- 4 667 575

## Beschreibung

Die Erfindung betrifft eine Membranpumpe gemäß dem Oberbegriff des Patentanspruchs 1. Solche Membranpumpen sind seit langem bekannt und auf dem Markt.

Bei diesen bekannten Membranpumpen wird die Membran zwischen den ebenen Stirnrandflächen von Pumpkopf und Hy-draulikteil eingespannt. Dies hat den Nachteil, daß bei Nachlassen der Axialverspannung zwischen Pumpkopf und Hydraulikteil die Membraneinspannung sehr schnell undicht wird und zu erheblichen Strömungsauswaschungen in einem der beiden Pumpenteile führt. In beide Gehäuseteile eingebaute Dichtrillen erbringen zwar eine gewisse Verbesserung, trotzdem aber muß nach vergleichsweise kurzen Betriebszeiten der Pumpe der Pumpkopf abgenommen werden, um entweder die Membrane auszutauschen und/oder die erwähnten Randflächenbereiche der beiden Pumpenteile nachzuarbeiten.

Es ist eine Membranpumpe bekannt (GB-A-1 108 423), bei der die Stirnrandflächen von Pumpkopf und Hydraulikteil mit korrespondierenden, geringfügig zueinander versetzten Schultern versehen sind, die eine Ringstufe bilden, welche den äußeren Ringrandbereich der Membrane abknickt und einspannt, um die Membran dazwischen zu sichern bzw. zu zentrieren.

Aufgabe der vorliegenden Erfindung ist deshalb, eine Membranpumpe der eingangs erwähnten Art so zu verbessern, daß eine langdauernde Dichtheit des Membranen-Einspannbereichs gewährleistet und damit ein Zerlegen der Pumpe erst nach wesentlich längeren Betriebszeiten erforderlich ist. Die Lösung dieser Aufgabe ergibt sich aus den kennzeichnenden Merkmalen des Patentanspruchs 1.

Durch die mit der Erfindung erreichbaren langen Betriebszeiten ohne Zerlegung der Pumpe und damit auch ohne Säuberung der Farbventile, kann es bei bestimmten Farben und/oder ungenügender Reinigung zu Verklebungen dieser Ventile kommen. Um zu vermeiden, daß aufgrund von Farbventilverklebungen die Membranpumpe trotz bestehender Dichtheit öfter zerlegt werden muß, werden gemäß zweckmäßigen Ausgestaltungen der Erfindung die Farbventile so ausgebildet, daß eventuelle Verklebungen von außen her beseitigt werden können; darauf sind die Unteransprüche 4 bis 7 gerichtet.

Die Erfindung wird nachfolgend anhand der Zeichnung näher erläutert. Es zeigen:
- Fig. 1: einen Längsschnitt durch den Pumpkopf und den angrenzenden Hydraulikteil der Membranpumpe,
- Fig. 2: einen Längsschnitt gemäß Fig. 1, jedoch in einer um 90° verdrehten Ebene;
- Fig. 3: einen vergrößerten Ausschnitt aus Fig. 1;
- Fig. 4: einen weiter vergrößerten Ausschnitt aus Fig. 3;
- Fig. 5: einen Längsschnitt durch ein Auslaßventil;
- Fig. 6A und 6B: Schnitte durch ein zweiteiliges Einlaßventil, und
- Fig. 7: einen Schnitt durch eine weitere Ausführungsform des Pumpkopfs.

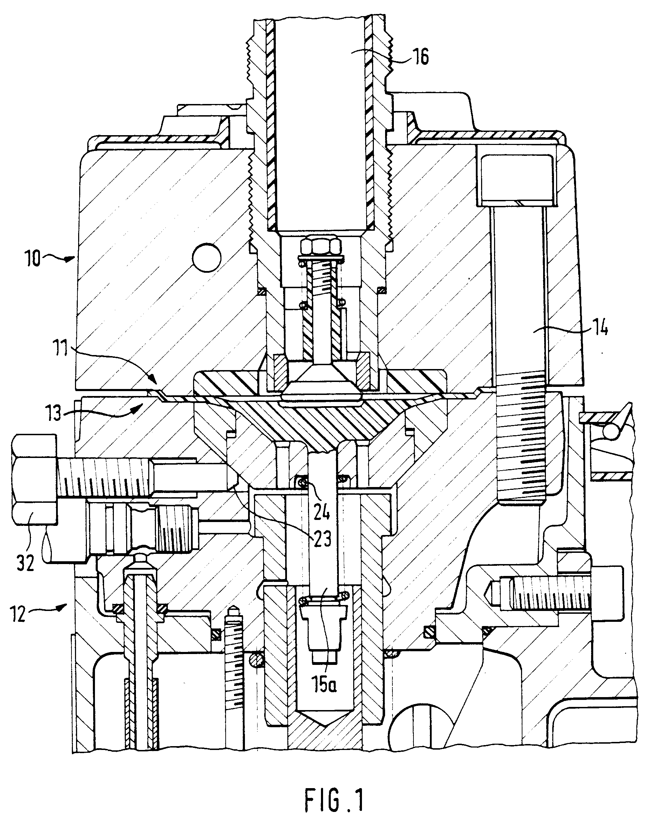

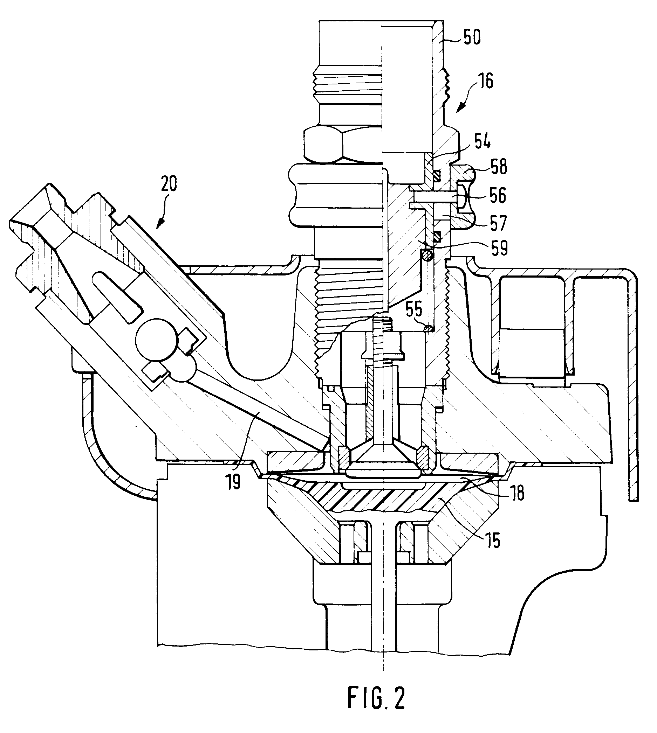

Gemäß Fig. 1 weist die Membranpumpe einen mit 10 bezeichneten Pumpkopf mit Ringrandfläche 11 und einen Hydraulikteil 12 mit Ringrandfläche 13 auf. Pumpkopf 10 und Hydraulikteil 11 sind mittels Schrauben 14 gegeneinander verspannt, wobei zwischen den beiden Teilen 10, 12 eine Membrane 15 eingesetzt ist, deren äußerer Ringrand zwischen den Ringrändern 11 und 13 der Teile 10, 12 festgeklemmt ist, wie später noch im einzelnen erläutert werden wird. Der Pumpkopf 10 wird zentral von einem Einlaßventil 16 durchsetzt, dessen Ventilkegel 17 zentral vor der Membrane 15 angeordnet ist, derart, daß sich vor der Membrane 15 eine flache Farbkammer 18 bildet. Von dieser Farbkammer 18 geht, wie aus Fig. 2 ersichtlich ist, ein Auslaßkanal 19 ab, der zu einem ebenfalls in den Pumpkopf 10 eingesetzten Farbauslaßventil 20 führt. Der Hydraulikteil 12 wird zentral von einem Antriebskolben 21 durchsetzt, der von einem auf der Zeichnung nicht ersichtlichen Exzenter angetrieben wird. Zwischen oberer Kolbenstirn 21a des Kolbens 21 und der Unterseite der Membrane 15 ist eine Antriebskammer 22 ausgebildet, die mit Hydraulikflüssigkeit angefüllt ist. Mit 23 ist ein in den Hydraulikteil eingesetzter Stützeinsatz bezeichnet, der zur Abstützung der Membrane 15 dient. Die Membrane 15, deren mittiger Fortsatz 15a durch eine zentrale Bohrung des Stützeinsatzes 23 hindurchragt, ist durch eine Feder 24 derart belastet, daß sie sich bei fehlendem Druck in der Antriebskammer 21 gegen den Stützeinsatz 23 legt, welche Position nachfolgend als unterer Totpunkt bzw. UT bezeichnet wird.

Der oben erläuterte Grundaufbau entspricht den üblichen Membranpumpen. Die Arbeitsweise ist dabei, kurz gesagt, derart, daß bei einem Hub des Antriebskolbens 21 nach unten (Saughub) die Membrane 15 sich infolge der Feder 24 ebenfalls nach unten bewegt und sich gegen den Stützeinsatz 23 legt (UT), womit sich das Einlaßventil 22 öffnet und Farbe in die Farbkammer 18 gelangt. Bewegt sich der Kolben 21 dann wieder nach oben (Druckhub), dann drückt die in der Arbeitskammer 22 befindliche Antriebsflüssigkeit die Membrane 15 nach oben zur Anlage an die Unterfläche des Pumpkopfs 10, mit der Folge, daß die in der Kammer 18 befindliche Farbe durch den Auslaßkanal 19 und das Auslaßventil 20 aus der Kammer 18 heraus und in eine - nicht gezeichnete - Förderleitung gepreßt wird.

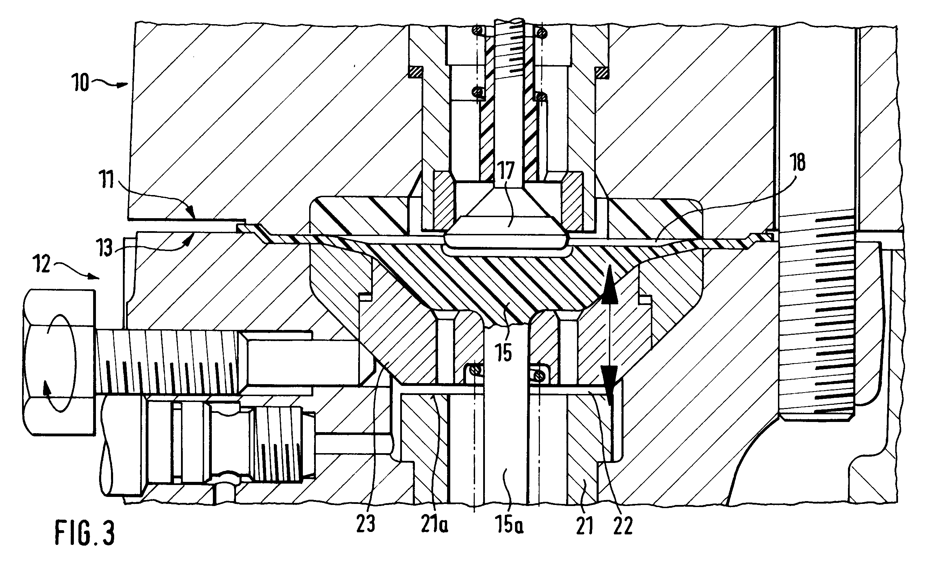

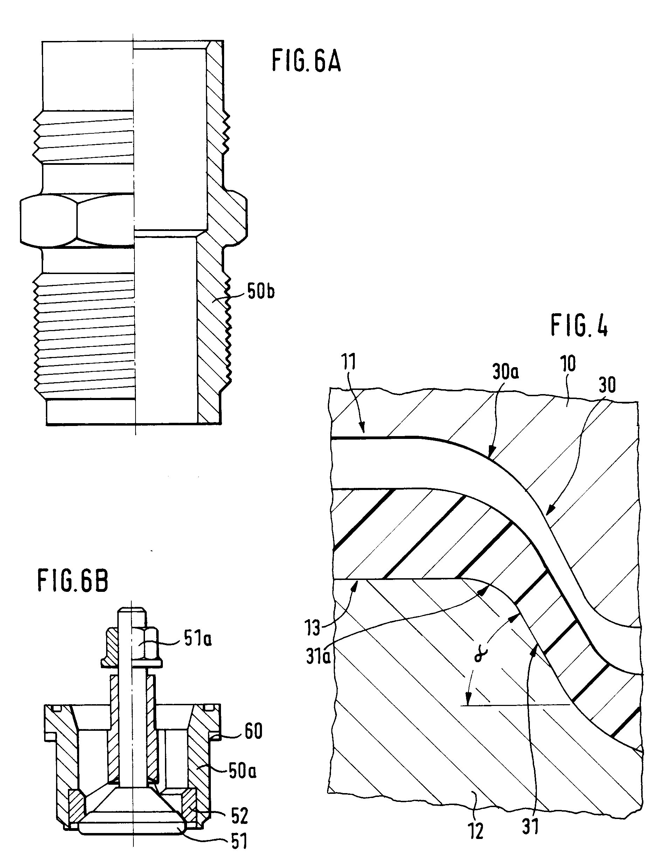

Gemäß der Erfindung weisen nun, wie am besten aus den Fig. 3 und 4 ersichtlich ist, die beiden einander gegenüberstehenden Ringränder 11, 13 von Pumpkopf 10 und Hydraulikteil 12 eine Abwinkelungsstufe 30, 31 auf, die zueinander korrespondierend ausgebildet sind. Der Stufenwinkel α gegenüber der Horizontalen soll zwischen 60 und 80°, vorzugsweise bei etwa 65° liegen. Die Stufe 30, 31 befindet sich an einer solchen Stelle, daß der äußere Ringrandbereich der Membrane von ihr erfaßt wird, wobei die Membrane am Stufenende 30a, 31a enden kann. Die Stufentiefe beträgt 2,5 bis 3,5 mm. Die Membrane wird also an dieser Stufe 30, 31 abgeknickt, wobei, von der Zentralachse der Membrane her gesehen, zunächst ein ebener Einspannbereich, dessen Länge beispielsweise 3 bis 5 mm beträgt, dann die Abknickung und eventuell schließlich ein weiterer ebener Bereich kommt. Durch diese Abknickung der Membrane 15 im Einspannbereich wird eine gegen Fließen oder Nachlassen der Schraubkräfte durch häufige Temperaturwechsel (Betriebszustand AN/Betriebszustand AUS) unempfindliche Dichtfunktion erreicht. Die Zahl der möglichen Betriebsstunden der Membranpumpe ohne Auswechseln der Membran wegen Undichtheit und Auswaschung der Ringränder und ohne Nacharbeit der Ringrandflächen oder Ersatz des Pumpkopfs und/oder des Hydraulikteils.

Diese abgewinkelte Membraneinspannung beeinflußt aber auch das Ansaugverhalten während des Entlüftens der Pumpe, also beim erstmaligen Füllen der Farbkammer 18 mit Farbe. Wird die Membrane 15 mit ihrer ringförmig flach ausgebildeten Einspannzone auf einen der beiden Ringrandbereiche 11, 13 vom Pumpkopf bzw. Hydraulikteil aufgelegt, wobei die Membrane durch die Feder 24 gegen die den UT bestimmenden Stützeinsatz 23 zur Anlage gebracht wird, und wird dann der zweite Ringrandbereich, z.B. der Ringrandbereich 11 des Pumpkopfs 10, aufgesetzt und die Verschraubung vorgenommen, dann wird durch das Abknicken der Membrane in der Membraneinspannzone eine gleichmäßige, ringförmige Zugspannung auf die Membrane 15 erzeugt, mit der Folge, daß die Membrane gegen die Kraft der Feder 24 geringfügig vom Stützeinsatz 23 nach oben und damit aus ihrem UT abgehoben wird. Beim Inbetriebsetzen der Membranpumpe führt die Membrane 15 damit ihren Hubweg mehr in ihrem oberen Hubbereich aus, also in einem Hubbereich, der durch einen Punkt oberhalb des UT und dem OT (oberer Totpunkt) begrenzt wird. Durch diese Maßnahme wird der Farbraum 18, der ja zunächst mit Luft gefüllt ist, vergleichsweise klein gehalten, was das Ansaugen der Farbe, auch hochviskoser Farben, merklich erleichtert. Hat sich der Farbraum 18 dann komplett mit Farbmaterial gefüllt, womit sich ein entsprechender Druck aufbauen kann, dann durchläuft die Membrane 15 nunmehr ihren vollen Hub vom UT bis zu einem Punkt kurz vor dem OT, das heißt, die Membranbewegung ist nunmehr mehr zum UT hin verlagert. Gleichzeitig aber führt die in der Membrane 15 bestehende gleichmäßige Ringzugspannung eine die hydraulische Antriebsseite unterstützende Wirkung zum Ausstoßen der Farbe aus dem Auslaßventil 20 aus, so daß der Pumpenwirkungsgrad bei Förderung insbesondere hochviskoser Farben zusätzlich verbessert wird.

Aus der Zeichnung ist ersichtlich, daß in den Hydraulikteil 12 eine Stellschraube 32 quer eingesetzt ist, die mit ihrem einen Ende aus dem Hydraulikteil herausragt und mit ihrem anderen Ende am Stützeinsatz 23 angreift. Durch diese Stellschraube 32 kann also der Stützeinsatz 23 von außen her axial verschoben werden. Damit ist eine Möglichkeit gegeben, den UT der Membrane 15 zu ändern und damit auf einfachste Weise eine Anpassung des Membran-Hubbereichs vorzunehmen, um so, entsprechend den obigen Erläuterungen, den Füllvorgang zu erleichtern und/oder eine Abstimmung auf die Viskosität der zu pumpenden Farbe vorzunehmen.

Die obigen Maßnahmen führen dazu, daß die erfindungsgemäße Membranpumpe lange betrieben werden kann, ohne daß es erforderlich wäre, die Pumpe zu zerlegen, also den Pumpkopf 10 abzubauen, um etwa die Membrane auszutauschen oder den Hubbereich der Membrane zu verändern. Ein weiterer Grund jedoch, daß bei den bekannten Membranpumpen der Pumpkopf 10 vergleichsweise häufig abgenommen werden muß, besteht darin, daß die Farbventile verstopfen, etwa durch Ablagerung von in der Farbe enthaltenen Feststoffpartikeln (Metall-Lacke). Gemäß einer Weiterbildung der Erfindung wird deshalb Sorge dafür getragen, daß die Farbventile gelöst werden können, ohne den Pumpkopf 10 abnehmen zu müssen.

Fig. 5 zeigt das Farbauslaßventil 20 in Einzeldarstellung. Das Ventil 20 weist eine Ventilkugel 40 auf, die durch eine nichtgezeichnete Ventilfeder gegen einen Ventilsitz 41 gepreßt wird. Während des Druckhubs der Membranpumpe wird die Ventilkugel 40 durch die bei 42 unter hohem Druck zuströmende Farbe gegen die Kraft der Ventilfeder angehoben, das Ventil also geöffnet. Während des Saughubs der Membranpumpe drückt die Feder die Kugel 40 gegen den Ventilsitz 41, schließt also das Ventil. Erfindungsgemäß ist nun das Auslaßventil 20 mit einem Kanal versehen, in welchem abdichtend ein Stößel 43 geführt ist. Der Stößel 43 ragt mit einem Ende aus dem Ventilgehäuse heraus und ist dort mit einem Betätigungsknopf 44 versehen. Das andere Ende des Stößels ist der Ventilkugel zugewandt, wobei die Stößelachse so angeordnet ist, daß sie die Kugel unterhalb der Kugelquerachse, also näher zum Ventilsitz 41 hin, tangiert. Eine den Stößel 43 umgebende Schraubenfeder 45 belastet den Stößel in Richtung weg von der Kugel 40. Wird jedoch der Knopf 44 eingedrückt und damit der Stößel 43 gegen die Kraft der Feder 45 zur Kugel 40 hin verschoben, dann hebt der Stößel 43 die federbelastete Ventilkugel 40 von ihrem Sitz 41 ab, womit eventuell bestehende Verklebungen gelöst werden. Dabei hat diese Gestaltung des Auslaßventils 20 den Vorteil, daß der Stößel 43 außerhalb des Strömungsbereichs leicht zugänglich bleibt.

Anhand der Figuren 2, 6A und 6B soll nun der Aufbau des Einlaßventils 16 erläutert werden. Dieses Einlaßventil 16 weist ein zylindrisches Gehäuse auf, das aus einem unteren Gehäuseteil 50a und einem oberen Gehäuseteil 50b besteht. Im unteren Gehäuseteil 50a sind ein Ventilteller 51 mit Ventilschaft 51a, ein Ventilsitz 52 und eine den Ventilteller 51 gegen den Ventilsitz 52 belastende Ventilfeder 53 untergebracht. Im oberen Gehäuseteil 50b befindet sich eine axial verschiebbare Hülse 54, die durch eine Feder 55 in Richtung nach oben belastet ist. Die Hülse 54 weist einen von ihrem Umfang nach außen abstehenden Stift 56 auf, der durch einen Längsschlitz 57 des Gehäuseteils 50b hindurchgreift und an einem Schiebering 58 befestigt ist, der auf dem Gehäuseteil 50b gleitbar sitzt. Schließlich weist die Hülse 54 eine nach innen abstehende Rippe 59 auf, deren freies Ende sich über dem Oberende des Ventilschafts 51a befindet. In dem in Fig. 2 dargestellten Zustand beeinflußt die Rippe 59 die Funktion des Ventils nicht. Wird nun aber der Ring 58 nach unten gedrückt, dann nimmt er über den Stift 56 die Hülse 54 gegen die Kraft der Feder 55 nach unten mit, so daß die Rippe 59 gegen das Oberende des Ventilstößels 51a schlägt und das Ventil öffnet. Sobald der Ring 58 losgelassen wird, schließt sich das Ventil wieder und die Hülse 54 kehrt in ihre Ursprungslage zurück.

Das Einsetzen des Einlaßventils 16 in den Pumpkopf erfolgt in der Weise, daß zunächst der untere, Ventilsitz 52 und Kegelventil 51 enthaltende Gehäuseteil 50a in eine entsprechende Bohrung des Pumpkopfs eingeführt wird, wobei dann eine Schulter 60 des Gehäuseteils 50a an einer entsprechenden Schulter der Pumpkopfbohrung zur Anlage kommt. Daraufhin wird der mit der erläuterten Schiebeeinrichtung versehene obere Gehäuseteil 50b des Einlaßventils 16 mittels Gewinde in die in ihrem oberen Teil als Gewindebohrung ausgebildete Bohrung des Pumpkopfs eingeschraubt, bis es mit seiner stirnseitigen Fläche den unteren Gehäuseteil 50a erreicht und diesen gegen den Pumpkopf verspannt. Die Abdichtungen erfolgen durch Dichtringe. Der Vorteil einer solchen zweiteiligen Ausführung des Einlaßventils 16 besteht darin, daß im Reparatur- oder Ersatzteilfall die Kosten bei einfacher Handhabung gering gehalten werden können.

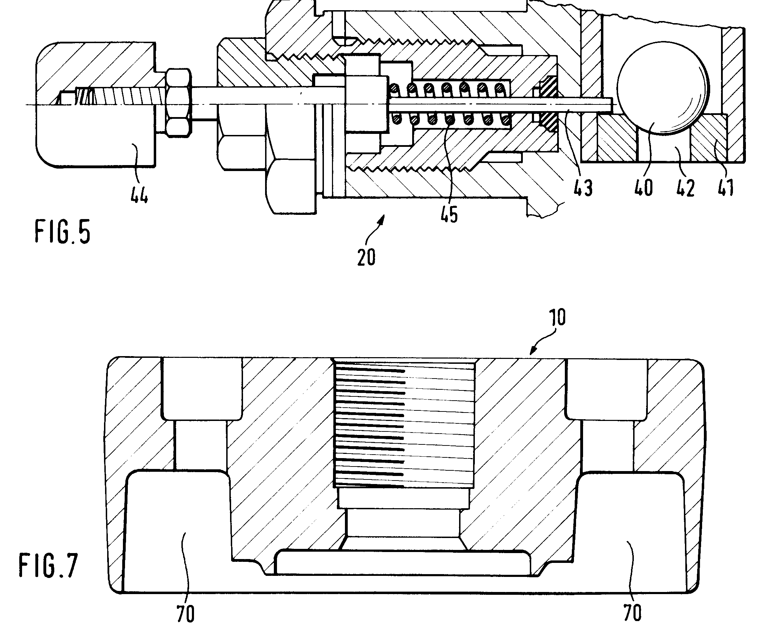

Aufgrund der bereits beschriebenen Erfindungsmerkmale können so lange Betriebszeiten ohne Abnahme des Pumpkopfs 10 und Reinigung desselben erreicht werden, daß sich die Gefahr einer Korrosion der heute im allgemeinen aus Leichtmetall gefertigten Pumpköpfe ergibt, insbesondere bei Einsatz sehr agressiver Farben. Nach einer weiteren Ausgestaltung der Erfindung wird deshalb der Pumpkopf 10 aus Stahl hergestellt, jedoch, wie aus Fig. 7 ersichtlich, mit Ausnehmungen 70 versehen. Mit anderen Worten, es wird nur dort Material vorgesehen, wo es tatsächlich funktionsbedingt erforderlich ist, um so ein Gewicht einhalten zu können, das vergleichbar mit den üblichen Leichtmetall-Pumpköpfen ist. Zweckmäßigerweise befinden sich die Ausnehmungen 70 im Pumpkopfinneren, wohingegen die Außenfläche des Pumpkopfs plan bleiben soll.

Zweckmäßigerweise ist der Außenrand des Pumpkopfs 10 schürzenartig verlängert, wobei diese Schürze 71 dann bei mit dem Hydraulikteil 12 verbundenem Pumpkopf 10 über den Hydraulikteil 12 greift, wie dies in Fig. 2 ersichtlich ist, womit der Membran-Einspannspalt überdeckt und das Eindringen von Schmutz verhindert wird. Außerdem wird die Ringstufe 30 des Pumpkopfs 10 gegen mechanische Beschädigungen geschützt, besonders auch bei Herstellung und Transport. Selbstverständlich kann auch der Hydraulikteil 12 mit einer Schutz-Schürze versehen werden, wobei dann die beiden Schürzen konzentrisch einander übergreifen oder eine der beiden Schürzen eine Eingriffsnut für die andere Schürze aufweist.

## Patentansprüche

1. Membranpumpe mit einem Hydraulikteil, einem Pumpkopf und einer Flachmembrane, die zwischen der Stirnrandfläche des Pumpkopfs und der korrespondierenden Stirnrandfläche des Hydraulikteils eingespannt ist, wobei der Pumpkopf eine an die Membrane angrenzende Farbkammer, ein zur Farbkammer führendes Farbeinlaßventil und ein von der Farbkammer wegführendes Farbauslaßventil, das Hydraulikteil einen senkrecht zur Membranebene oszillierenden Antriebskolben, eine zwischen Kolbenstirn und Membrane befindliche, mit Antriebsflüssigkeit gefüllte Antriebskammer, einen Stützringeinsatz zum Abstützen der Membrane in ihrer Kolbensaughub-Endlage und eine die Membrane in diese Endlage belastende Feder aufweist, dadurch gekennzeichnet, daß die Stirnrandflächen (11, 13) von Pumpkopf (10) und Hydraulikteil (12) mit korrespondierenden konischen Abwinkelungen (30, 31) versehen sind, die eine Ringstufe bilden, welche den äußeren Ringrandbereich der Membrane (15) abknickt und einspannt.

2. Membranpumpe nach Anspruch 1, gekennzeichnet durch einen Stufenwinkel (α) gegenüber der Horizontalen von 60 bis 80°, vorzugsweise 65 bis 70°, eine plane radiale Erstreckung des Einspannbereichs der Membrane (15) bis zur Stufe von 3 bis 5 mm und eine Stufentiefe von 2,5 bis 3,5 mm.

3. Membranpumpe nach Anspruch 1 oder 2, gekennzeichnet durch eine in das Hydraulikteil eingesetzte Stellschraube (32), die mit ihrem einen Ende aus dem Hydraulikteil herausragt und mit ihrem anderen Ende zum axialen Verschieben des Stützringeinsatzes (23) an diesem angreift.

4. Membranpumpe nach einem der Ansprüche 1 bis 3, dadurch gekennzeichnet, daß die Membrane (15) am Stufenende (30a, 31a) endet.

5. Membranpumpe nach einem der Ansprüche 1 bis 4, dadurch gekennzeichnet, daß das Farbauslaßventil (20) und das Farbeinlaßventil (16) von außen aus ihrem Ventilsitz (41; 52) abhebbare Ventilkörper (40; 51) aufweist.

6. Membranpumpe nach Anspruch 5, dadurch gekennzeichnet, daß das Auslaßventil (20) einen federbelasteten Stößel (43) aufweist, der mit seinem einen Ende (44) aus dem Ventilgehäuse herausragt und derart verschiebbar ist, daß sein anderes Ende an der Ventilkugel (40), diese von ihrem Sitz (41) abhebend, angreift.

7. Membranpumpe nach Anspruch 5 oder 6, dadurch gekennzeichnet, daß das Einlaßventil (16) eine im Ventilgehäuse (50) gleitbare Hülse (54) aufweist, von deren Außenumfang zumindest ein durch einen Langschlitz (57) des Ventilgehäuses (50) nach außen hindurchgreifender Stift (56) absteht und die zumindest eine zentral nach innen abstehende Rippe (59) besitzt, die bei einem Verschieben der Hülse (54) gegen Federdruck am Ventilkörperstößel (51a) unter Öffnen des Ventils angreift.

8. Membranpumpe nach Anspruch 5 oder 7, dadurch gekennzeichnet, daß das Einlaßventil-Gehäuse (50) aus zwei gegeneinander verspannbaren Gehäuseteilen (50a, 50b) besteht.

9. Membranpumpe nach einem der Ansprüche 1 bis 8, gekennzeichnet durch einen aus Stahl bestehenden, zur Gewichtserleichterung Hohlräume und Ausnehmungen (70) aufweisenden Pumpkopf (10), dessen äußerster Rand (21) als den Hydraulikteil (12) übergreifende Schürze ausgebildet ist.

## Claims

1. Diaphragm pump having a hydraulic portion, a pump head and a flat diaphragm which is clamped between the front edge surface of the pump head and the corresponding front edge surface of the hydraulic portion, the pump head having a paint chamber adjacent to the diaphragm, a paint inlet valve leading to the paint chamber and a paint outlet valve leading out of the paint chamber, and the hydraulic portion having a drive piston oscillating perpendicularly to the diaphragm plane, a drive chamber located between the piston front and the diaphragm and filled with drive fluid, a support ring insert for supporting the diaphragm in its piston suction stroke end position, and a spring loading the diaphragm into this end position, characterised in that the front edge surfaces (11, 13) of the pump head (10) and the hydraulic portion (12) are provided with corresponding conical angled portions (30, 31) which form an annular step which bends and clamps the outer annular edge region of the diaphragm (15).

2. Diaphragm pump according to claim 1, characterised by a stepped angle (α) with respect to the horizontal of 60 to 80°, preferably 65 to 70°, a plane radial extension of the clamping region of the diaphragm (15) up to the step of 3 to 5 mm, and a step depth of 2.5 to 3.5 mm.

3. Diaphragm pump according to claim 1 or 2, characterised by an adjustment screw (32), inserted into the hydraulic portion, which protrudes with its one end out of the hydraulic portion and with its other end engages thereon for axial displacement of the support ring insert (23).

4. Diaphragm pump according to one of claims 1 to 3, characterised in that the diaphragm (15) ends at the step end (30a, 31a).

5. Diaphragm pump according to one of claims 1 to 4, characterised in that the paint outlet valve (20) and the paint inlet valve (16) have valve bodies (40; 51) which can be removed from the outside from their valve seat (41; 52).

6. Diaphragm pump according to claim 5, characterised in that the outlet valve (20) has a spring-loaded plunger (32) which protrudes with its one end (44) from the valve housing and can be shifted in such a way that its other end engages on the valve ball (40) lifting it from its seat (41).

7. Diaphragm pump according to claim 5 or 6, characterised in that the inlet valve (16) has a sleeve (54) which can be slid in the valve housing (50), from the outer circumference of which sleeve at least one pin (56) projects, passing outwardly through a longitudinal slot (57) of the valve housing (50), and which has at least one rib (59) which, on a displacement of the sleeve (54) against spring pressure, engages the valve body plunger (51a) when opening the valve.

8. Diaphragm pump according to claim 5 or 7, characterised in that the inlet valve housing (50) comprises two housing portions (50a, 50b) which can be clamped with respect to each other.

9. Diaphragm pump according to one of claims 1 to 8, characterised by a pump head (10) made of steel and having hollow chambers and recesses (70) for lightening the weight, the outermost edge (21) being designed as an apron engaging over the hydraulic portion (12).

## Revendications

1. Pompe à membrane avec une partie hydraulique, une tête de pompe et une membrane plate qui est enserrée entre la surface frontale de la tête de pompe et la surface frontale de la partie hydraulique correspondante, la tête de pompe présentant, d'une part, une chambre de couleur adjacente à la membrane, une soupape d'admission de la couleur menant à la chambre de couleur et une soupape d'évacuation de la couleur s'éloignant de la chambre de couleur, la partie hydraulique présentant, d'autre part, un piston d'entraînement oscillant perpendiculairement au plan de la membrane, une chambre de commande remplie de liquide d'entraînement et se trouvant entre la tête de piston et la membrane, une garniture de bague d'appui pour supporter la membrane dans sa position finale de levée par aspiration du piston et un ressort chargeant la membrane dans sa position finale, caractérisée en ce que les surfaces frontales (11, 13) de la tête de pompe (10) de la partie hydraulique (12) sont pourvues d'inflexion coniques correspondantes formant un étage annulaire qui fait fléchir en la pliant la zone de bordure annulaire de la membrane (15) et l'enserre .

2. Pompe à membrane selon la revendication 1, caractérisée par un angle de dénivélation (α) par rapport à l'horizontale, de 60 à 80°, de préférence de 65 à 70°, par une étendue radiale plane de la zone d'enserrement, comprise dans une plage allant de 3 à 5 mm, de la membrane (15) jusqu'à l'étage, et une profondeur d'étage comprise dans une plage allant de 2,5 à 3,5 mm

3. Pompe à membrane selon la revendication 1 ou 2, caractérisée par une vis de réglage (32) insérée dans la partie hydraulique, qui fait saillie, par l'une de ses extrémités, hors de la partie hydraulique et agit sur celle-ci par son autre extrémité pour déplacer axialement la garniture de bague d'appui (23).

4. Pompe à membrane selon l'une des revendications 1 à 3, caractérisée en ce que la membrane (15) se termine sur l'extrémité de l'étage (30a, 31a).

5. Pompe à membrane selon l'une des revendications 1 à 4, caractérisée en ce que la soupape d'évacuation de la couleur (20) et la soupape d'admission de la couleur (16) présentent des corps de soupape (40; 51) pouvant être soulevés de leur siège de soupape (41; 52) depuis l'extérieur.

6. Pompe à membrane selon la revendication 5, caractérisée en ce que la soupape d'évacuation (20) présente un poussoir (43) chargé élastiquement, qui sort par sa première extrémité (44) hors du boîtier de soupape et peut être déplacé de manière que son autre extrémité agisse sur la bille de soupape (40), en soulevant celle-ci de son siège (41).

7. Pompe à membrane selon la revendication 5 ou 6, caractérisée en ce que la soupape d'admission (16) présente une douille (54) pouvant coulisser dans le boîtier de soupape (50), douille du périmètre extérieur de laquelle part au moins une tige (56), agissant vers l'extérieur à travers une fente longitudinale (57) du boîtier de soupape (50) et qui comporte, au moins, une nervure (59) faisant saillie vers l'intérieur centralement, qui agit, lors d'un déplacement de la douille (54), à l'encontre de la pression du ressort, exercée sur le poussoir du corps de soupape (51a), en ouvrant la soupape.

8. Pompe à membrane selon la revendication 5 ou 7, caractérisée en ce que le boîtier de la soupape d'admission (50) est composé de deux parties de boîtier (50a, 50b) pouvant être montées l'une contre l'autre par serrage.

9. Pompe à membrane selon l'une des revendications 1 à 8, caractérisée par une tête de pompe (10) en acier, présentant des cavités et des évidements (70) pour obtenir un allégement du poids, tête de pompe dont le bord (21) le plus extérieur est réalisé sous forme de tablier entourant la partie hydraulique (12).
